# EUROPÄISCHE PATENTANMELDUNG

(11) **EP 4 112 238 A1**
(43) Veröffentlichungstag der Anmeldung: **04.01.2023**
(21) Anmeldenummer: 21182082.4
(22) Anmeldetag: 28.06.2021
(51) Int. Cl.: B25J 9/16

(54) **AUTONOMES MANIPULIEREN EINER BIEGESCHLAFFEN PRIMÄRVERPACKUNG IN EINER FORMSTABILEN SEKUNDÄRVERPACKUNG MITTELS ROBOTER**

(71) Anmelder: Bayer Aktiengesellschaft, 51373 Leverkusen (DE)
(72) Erfinder: Die Erfindernennung liegt noch nicht vor
(74) Vertreter: BIP Patents

(57) **Zusammenfassung**

System zum automatisierten Manipulieren einer Primärverpackung in einer Sekundärverpackung, umfassend einen Roboter mit zwei Roboterarmen mit jeweils einem im Tool Center Point montierten Klemmgreifer, und Kraft-Momenten-Sensor, ein Bildaufnahmemodul zur Bildaufnahme mindestens des oberen Segments der Primärverpackung umfassend mindestens zwei Stereokamera zur 3D-Bildaufnahme und ein oder mehrere Prozessoren zur Bereitstellung einer 3-dimensionalen Punktewolke, Steuerung des Bildaufnahmemoduls und Steuerung des Roboters anhand der Analyse der 3-dimensionalen Punktwolke und der Messungen aus den Kraft-Momenten-Sensoren.

## Beschreibung

Die Anmeldung betrifft eine Lösung zum automatisierten Manipulieren einer biegeschlaffen Primärverpackung in einer formstabilen Sekundärverpackung mit Hilfe eines zweiarmigen Roboters. Insbesondere soll die Lösung vor Kontamination schützen und die Sekundärverpackung wiederverschließbar sein.

In der chemisch-pharmazeutischen Industrie stellen Papptrommeln (Sekundärverpackung, auch Fiebertrommeln genannt) mit PE-Inliner (Primärverpackung, vgl. Kunststofftüte) für pulver- und granulat-förmige Feststoffe ein Standardgebinde für den Transport und die Lagerung von Material dar. Das Material befindet sich hierbei im verschlossenem PE-Inliner, der wiederum durch eine Papptrommel geometrisch stabilisiert und geschützt ist. Zum Verschluss der Trommel wird üblicherweise ein metallischer Spannring verwendet. Üblich sind zylinderförmige Papptrommel mit einem Volumen von 3 bis 120 L.

Der Eingangszustand für das Gebinde ist typischerweise ein verschlossener und ggf. verdrehter oberer Abschnitt des PE-Inliner (Primärverpackung) in einer geöffneten Papptrommel (Sekundärverpackung). Der Zielzustand stellt einen geöffneten PE-Inliner dar, so dass Material auf eine beliebige Art entnommen werden kann. Der PE-Inliner wird typischerweise beim Verpackungsprozess beansprucht, so dass oft-manipulierte bzw. zu-oft manipulierte PE-Inliner ein verändertes auch unterschiedliches physisches Verhalten aufweisen. Die Herausforderung dabei stellt das automatische Öffnen des biegeschlaffen PE-Inliners dar, ein Prozess, der bislang manuell durchgeführt wird.

Motiviert durch den Health-Safety-Environment (HSE)-basierten Grund, Mensch und (Wirk-) Stoffe zu trennen, ist eine Automatisierung des Prozesses zwingend erforderlich.

Aufgrund der hohen Anzahl genutzter Papptrommeln und biegeschlaffen PE-Liner als etablierten Gebinde in der Industrie bestand Bedarf nach einer Lösung, zum Manipulieren insbesondere zum autonomen Öffnen der PE-Inliner in diesen Standardgebinde durch einen Roboter. Darüber hinaus sollte die Lösung ein autonomes Entladen- bzw. Beladen sowie Schließen der biegeschlaffen Primärverpackung in der Sekundärverpackung durch einen Roboter ermöglichen.

Die Aufgabe wurde durch ein System und ein Verfahren nach den Ansprüchen 1 und 11 gelöst. Die davon abhängigen Ansprüche stellen besondere Ausführungsformen der erfindungsgemäßen Lösung dar.

Die Erfindung wird nachfolgend näher beschrieben, ohne zwischen den Erfindungsgegenständen (Verfahren und System) zu unterscheiden. Die nachfolgenden Erläuterungen sollen vielmehr für alle Erfindungsgegenstände in analoger Weise gelten, unabhängig davon, in welchem Kontext (Verfahren oder System) sie erfolgen.

Eine biegeschlaffe Primärverpackung im Sinne dieser Anmeldung ist typischerweise eine Tüte, z. B. eine Kunststofftüte insbesondere eine Polyethylen-Tüte auch PE-Inliner genannt. Eine formstabile Sekundärverpackung im Sinne der Anmeldung ist typischerweise ein Fass oder eine Trommel insbesondere eine Papptrommel. Die Beispiele sind aber für die Anwendbarkeit der beschriebenen Lösung nicht begrenzend.

Der Begriff "Manipulieren" im Sinne der Anmeldung bezeichnet das Verändern der geometrischen Form des PE-Inliners in der Sekundärpackung um den Inhalt z. B. zu Beproben, zu Entnahmen oder zu Beladen.

Erster Gegenstand der Anmeldung ist ein System zum automatisierten Manipulieren einer Primärverpackung in einer Sekundärverpackung (zusammen auch Gebinde genannt) umfassend folgende Systemmodule:
- Zum automatisierten und autonomen Öffnen der Primärverpackung wird ein flexibles kraftgeregeltes Robotermodul eingesetzt. Dieses Robotermodul umfasst einen Roboter mit zwei Roboterarmen, mit jeweils einem Klemmgreifer an einem Tool Center Point montiert. Die Klemmgreifer werden für die Durchführung der Öffnen-, Entladungs- und Beladungs-, sowie Schließen-Prozesse unter Berücksichtigung der Informationen aus einer Kraft-Momenten-Sensorik der Roboterarmengesteuert.
- Ein Bildaufnahmemodul zur Bildaufnahme mindestens des oberen Segments der Primärverpackung, das mindestens zwei Stereokamera zur 3D-Bildaufnahme mindestens des oberen Segments der Primärverpackung umfasst, wobei mindestens eine der Stereokameras seitlich zu einer Linie zwischen dem Gebinde und dem Roboter platziert ist.
   In einer Ausführungsform nimmt eine erste Kamera das Gebinde von oben auf und die zweite Kamera seitlich, bevorzugt in einem Rechtwinkel zu einer Linie zwischen dem Gebinde und dem Roboter, platziert ist, bevorzugt in der Vertikalen mit einem Winkel von 60 bis 70 Grad. In einem weiteren Beispiel wird eine dritte Kamera verwendet, die gegenüber der zweiten Kamera platziert ist.
   Die Kameras sind zueinander und zum Robotermodul kalibriert (Hand-Eye-Calibration).
   In einer Ausführungsform wird ein Bild des oberen Segments der Primärverpackung und des oberen Segments der Sekundärverpackung aufgenommen.
- Ein oder mehrere Prozessoren (zusammenfassend auch Steuerungsmodul genannt) zur Steuerung der Systemmodule konfiguriert für die Durchführung folgender Schritte:
   ∘ Steuerung der Bildaufnahme durch das Bildaufnahmemodul,
   ∘ Empfang der Bilder aus dem Bildaufnahmemodul,
   ∘ Bildbearbeitung und Bereitstellen einer 3D-Punktewolke,
   ∘ Oberflächenrekonstruktion der Primärverpackung und der Sekundärverpackung aus der 3-dimensionalen-Punktwolke;
   ∘ Berechnen des höchsten Punktes der Primärverpackung aus der 3D-Punktwolke als Greifposition des Klemmgreifers;
   ∘ Berechnen einer Bewegung bzw. eines Bewegungsablaufs des Klemmgreifers zu der Greifposition und
   ∘ Weitergeben der berechneten Bewegung bzw. Bewegungsablauf an das Robotermodul;
   ∘ Empfang der Messungen aus den Kraft-Momenten-Sensoren und Detektion einer Verdrehrichtung und /oder Spannung der Primärverpackung aufgrund einer auftretenden Kraft und/oder eines auftretenden Drehmomentes;
- Schnittstellen zwischen das Robotermodul und den Prozessoren und zwischen das Bildaufnahmemodul und den Prozessoren.

In einer Ausführungsform wird für eine zuverlässigere Bilderkennung ist eine zusätzliche, flächige Beleuchtung der Gebinde, bevorzugt von oben, verwendet.

In einer Ausführungsform umfasst das System ein Modul zur Platzierung des Gebindes in Reichweite des Roboters und sowie unter der ersten Stereokamera und im Aufnahmebereich der zweiten Stereokamera.

Unter einem Robotermodul ist im Rahmen der Erfindung eine Vorrichtung zu verstehen, die dazu ausgelegt ist, mit der Umgebung physikalisch zu interagieren, um mechanische Arbeit durchzuführen. Jeder Roboterarm (auch Manipulator genannt) des Robotermoduls umfasst am Tool Center Point ein Greifsystem, typischerweise ein Klemmgreifer, wodurch die Primärverpackung gegriffen und manipuliert wird. Grundsätzlich ist es möglich, dass der Roboterarm manuell gesteuert wird. Allerdings ist bevorzugt vorgesehen, dass die Bewegung des Roboterarms durch Eingabe und/oder Programmierung kraftgeregelt gesteuert wird.

In einer Ausführungsform weist der Roboterarm mehrere Bewegungsachsen auf, damit der Klemmgreifer sich die Primärverpackung von oben mit maximalem Freiheitsgrad annähern kann. Die Überwachung der auf die Bewegungsachsen wirkenden Kräfte und oder Momente ist vorteilhaft, da so unterschieden werden kann, wo Kräfte und oder Momente an dem Robotermodul angreifen.

In einer Ausführungsform umfasst die Kraft-Momenten-Sensorik ein oder mehrere Kraft-Momenten-Sensoren (KMS), die die Verdrehrichtung und Spannung der Primärverpackung aufgrund des auftretenden Drehmomentes in 6 Dimensionen - typischerweise 3 translatorische und 3 rotatorische Dimensionen- detektieren können, ohne die Erfindung jedoch auf diese Ausführungsform zu beschränken.

Das Gebinde muss in Reichweite der Klemmgreifer und in dem Aufnahmebereich der Kameras platziert werden. In einem Beispiel ist das Robotermodul fixiert und das Gebinde in Reichweite der Klemmgreifer platziert. Bevorzugt ist die Sekundärverpackung in diesem Aufnahmebereich drehbar gelagert. So kann der Roboter besser greifen und das Gebinde kann sich bei Bedarf den Kräften anpassen, zum Beispiel kann durch das reaktive Drehen des Gebindes das Reißen der Sekundärverpackung unterstützend verhindern.

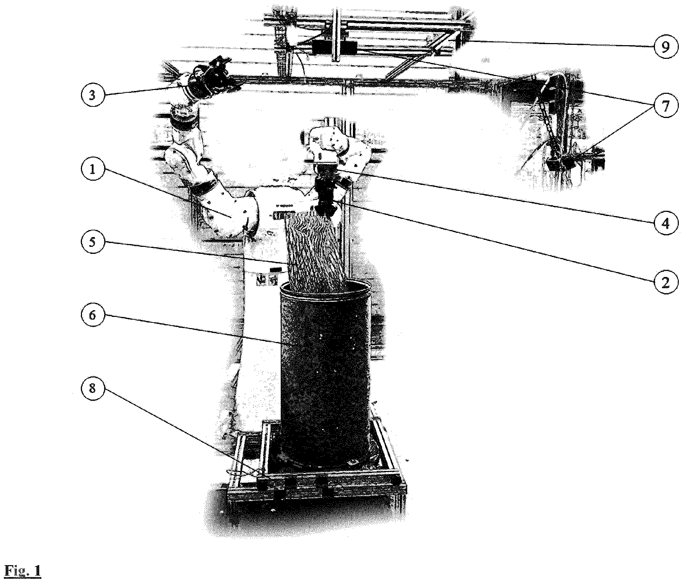

Es ist bevorzugt eine gleichmäßige, flächige Beleuchtung typischerweise von oben bereitzustellen. Dies kann mit einer Beleuchtungsvorrichtung quadratisch über dem Roboter und der Trommel in Form von LED-Lichtleisten wie z. B. Fig. 1, Ziffer 9 dargestellt erreicht werden. Vorzugsweise wird eine Anordnung von LEDs verwendet.
Dem Fachmann ist offensichtlich, dass die Auswahl und Geometrie der Beleuchtung beliebig angepasst werden kann, um eine möglichst gleichmäßige Beleuchtung der Gebinde im Aufnahmebereich zu erreichen.

In einer Ausführungsform sind ein oder mehrere Prozessoren zur Steuerung der Systemmodule konfiguriert für die Durchführung der Kalibration der Stereokameras zueinander und zum Roboter (einer sogenannte Hand-Eye-Calibration). Diese Kalibration erfolgt typischerweise einmal bei der Inbetriebnahme des Systems.

Das erfindungsgemäße System zeichnet sich dadurch aus, dass alle eingesetzten Hardware-Komponenten flexibel einsetzbar sind und keine speziell auf die Anwendung angepasste Werkzeuge darstellen.

Weiterer Gegenstand der Anmeldung ist ein Verfahren zum automatisierten Manipulieren einer biegeschlaffe Primärverpackung (wie z. B. eine Tüte) in einer formstabilen Sekundärverpackung, zusammen Gebinde genannt, durch einen computer-gesteuerten Roboter mit zwei Arme mit jeweils an einem Tool Center Point fixierten Klemmgreifer überwacht mit einem Kraft-Momenten-Sensor, wobei in einem ersten Schritt eine 3-dimensionale Punktewolke (3D-Punktewolke) mindestens des oberen Segments der Primärverpackung bereitgestellt wird und einen höchsten Punkt der Primärverpackung aus der 3D-Punktewolke, als Greifpunkt für einen der Klemmgreifer des Roboters mit Hilfe eines Computerprogramms ermittelt wird. In einem weiteren Schritt wird eine Bewegung für den Klemmgreifer zu dem berechneten Greifpunkt mit Hilfe des Computerprogramms berechnet und dem Roboter übermittelt. Der Klemmgreifer bewegt sich nach der berechneten Bewegung zu dem Greifpunkt, greift die Primärverpackung am Greifpunkt, zieht unter Berücksichtigung von Informationen aus dem Kraft-Momentan-Sensor am Tool Center Point des bewegten Klemmgreifers die Primärverpackung in einer Bewegung oder einer Drehbewegung entdreht nach oben hoch zieht.

Bewegt sich der Klemmgreifer in einer Bewegung oder einer Drehbewegung nach oben hoch, öffnet er die Primärverpackung dabei so, dass er die Primärverpackung zur Seite zieht und öffnet, damit Material mit Werkzeugen aus der Primärverpackung entnommen bzw. in die Primärverpackung eingeführt werden kann.

In einer Ausführungsform bewegt sich der Klemmgreifer in einer Drehbewegung nach unten und, schließt die Primärverpackung dabei so, dass sie verdreht schneckenförmig nach unten gedrückt ist.
Solche weiteren Schritte und / oder auch Schritte zur Entnahme oder Auffüllen von Material in die geöffnete Primärverpackung mit einem passenden Werkzeug können in das Steuerungsmodul konfiguriert werden.

In weitere Schritte kann Material aus der Primärverpackung entladen- bzw. beladen werden.

In einer Ausführungsform umfasst das erfindungsgemäße Verfahren folgende Subschritte:
a.i. Bereitstellen einer 3D-Punktewolke mindestens des oberen Segments der Primärverpackung oder des Gebindes durch Bildaufnahme mittels mindestens zwei Stereokameras;
a.ii. Bevorzugt, Entfernen von Rauschen und / oder Reduktion der Punkteanzahl zur einfacheren Verarbeitung der Daten. Eine solche Reduktion erfolgt typischerweise durch das automatische Entfernen sehr nah beieinanderliegender Punkte. Die Reduktion der Punkteanzahl verringert den erforderlichen Rechenaufwand des Bildverarbeitungssystems. In einem Beispiel wird zur Reduktion der Punktezahl diese dadurch bis zu einem Zielwert wie etwa 50 % reduziert, indem die an nächsten zueinander liegenden Punkten eliminiert werden. Dieser Prozess wird durchgeführt bis nur noch die Anzahl der gewünschten Punkte von der Startpunktzahl erreicht ist. Eine solche Reduktion wird z. B. von Part et al. beschrieben (http://www.cs.cmu.edu/∼hyunsoop/cvpr13.pdf).
a.iii. Zuordnung von Punkten zu den bekannten Geometrien bzw. Element, mindestens zu der Primärverpackung, optional zu der Sekundärverpackung, zu dem Klemmgreifer, zu dem Roboterarm und/oder zu der sichtbaren Fläche eines Materials in der Primärverpackung. Dadurch können auch deren Position und Größe ermittelt werden.
   Für diese Zuordnung werden typischerweise die Position benachbarter Punkte der 3D-Punktewolke miteinander verglichen und einer jeweiligen Geometrie, auch geclusterter Bereiche genannt, zugeordnet. Hierzu gehören z. B. die aus der Punktewolke abgeleitete Sekundärverpackung auf Basis des Kriteriums "zylindrisch geometrischer Körper" oder eigens definierte Störkonturen bewegter (z. B. Kabelführung am Klemmgreifers) oder stationärer (z. B. Kameras, Lichtleistenquadrat) Konturen.
   Alle Punkte, die zum Roboter und den Klemmgreifers gehören, können basierend auf der bekannten Position des Roboters herausgerechnet werden.
   In einem Beispiel können die Punkte, die sich innerhalb einer zur Primärverpackung zugeordneten Fläche und auf einer flachen Ebene befinden der sichtbaren Fläche des Materials- zugeordnet werden. Aus diesen Punkten kann eine Materialfläche berechnet werden.
a.iv. Selektion der Punkte der 3D-Punktewolke, die zur primären Verpackung zugeordnet sind, gegebenenfalls mittels Abzugs der Punkte, die zur Sekundärverpackung oder Klemmgreifer gehören.

In einer Ausführungsform umfasst das Verfahren folgende Subschritte zur Berechnung der Bewegung eines des Klemmgreifers.
b.i. Berechnung eines kollisionsfreien Annäherungspfad für einen der Klemmgreifer. Bevorzugt nähert sich der Klemmgreifer von oben. In einem Beispiel wird für diese Berechnung die Definition geclusterter Bereiche aus a.iii berücksichtigt.
b.ii. Annähern des Klemmgreifers gemäß den Annäherungspfad aus b.i.

Hinsichtlich der Bewegung des Roboterarmes kann es vorgesehen sein, dass der Roboterarm und der Klemmgreifer sich zu Beginn des erfindungsgemäßen Verfahrens in einer definierten Ausgangsposition, auch erste Position genannt, befindet. Bevorzugt ist diese erste Position vorab definiert. Ebenfalls kann die definierte erste Position beim Einmessen des erfindungsgemäßen Systems bzw. des Roboterarms bestimmt werden. Lässt der Klemmgreifer die Primärverpackung los, kann der Roboterarm zu der definierten ersten Position zurückkehren.

In einer Ausführungsform berechnet der Roboter sein Annäherungspfad selbständig über eine dynamische Bahnplanung. Methoden zur Berechnung einer dynamischen Bahnplanung sind aus dem Stand der Technik bekannt. Z.B. wurde für die Bahnplanung die Software Lösungen aus der ROS-Bibliothek für Manipulatoren (ros.org) verwendet.
In einem Beispiel wird für die Bahnplanung vorgegeben, dass der Klemmgreifer von oben senkrecht die Primärverpackung greift und sich kollisionsfrei annähert.

In einer Ausführungsform umfasst das Hochziehen und Entdrehen der primären Verpackung folgende Schritte:
c.i. Greifen von oben am in a.v. ermittelten höchsten Punkt der Primärverpackung und hochziehen bis eine vordefinierte Obergrenze für die Spannung der Primärverpackung gemessen durch den KMS-Sensor erreicht wird, währenddessen die Verdrehung der Primärverpackung mit Hilfe des KMS-Sensors gemessen wird, und das Handgelenk des Roboterarms entgegen der gemessenen Verdrehung gedreht wird bis der ,KMS-Sensor keine Spannung um die vertikale Achse (Längsachse) mehr detektiert.
c.ii. Loslassen der Primärverpackung durch Öffnen des Klemmgreifers. Bevorzugt wird der erste Roboterarm zur Seite, in die Initialpose, gefahren.
Die Subschritte a.i bis a.v sowie b.i bis b.ii. werden üblicherweise wiederholt, bis die Primärverpackung hochgezogen und entdreht ist.

In einer Ausführungsform umfasst das Öffnen der Primärverpackung folgende Schritte:
d.i. Wiederholung der Schritte a.i. bis a.iv zur Bereitstellung einer aktuellen 3D-Punktewolke;
d.ii. Selektion einer Region von benachbarten Punkten der 3D-Punktewolke, die zur Kante der Primärverpackung zugeordnet sind, wobei dies über die Betrachtung der Höhe der jeweiligen Region und der Ausrichtung eines Normalenvektors auf den Punkten der Regionen erfolgt. Wenn der Normalenvektor horizontal ausgerichtet ist, kann daraus abgeleitet werden, dass die Fläche senkrecht steht. In einem Bespiel wird Schritt d.ii. wiederholt, bis eine Region gefunden, wird, dessen Normalenvektor nicht horizontal ist, d. h. noch geöffnet werden muss. Mit anderen Worten wird für das nächste Greifen eine Region ausgewählt, beim der der Normalenvektor nicht horizontal ist.
d.iii. Greifen der selektierten Region mit dem ersten Klemmgreifer und Messung einer Spannung in der Primärverpackung durch die KMS-Sensoren;
d.iv. Bewegung des Klemmgreifers soweit nach oben außen, bis der Klemmgreifer direkt oberhalb des Randes der Sekundärverpackung ist und eine vordefinierte Obergrenze für die Spannung der Primärverpackung gemessen durch die KMS-Sensoren erreicht wird.
   In einem Beispiel ist die vordefinierte Obergrenze für die Spannung der Primärverpackung abhängig von den Reißeigenschaften der Primärverpackung. Typischerweise wird die vordefinierte Obergrenze für die Spannung der Primärverpackung experimentell ermittelt. Außerdem kann durch Anwendung einer drehbaren Platzierung des Gebindes eine Überspannung der Primärverpackung verhindert; nehmen die Kräfte plötzlich ab, hat sich die Trommel gedreht.
d.v. Schritte b.i. bis b.iv. wiederholen, vorzugsweise im Wechsel mit dem anderen Arm, bis die erste Kamera ein Bild bereitstellt in dem erkennbar ist, dass die Primärverpackung ausreichend geöffnet ist, um mit Werkzeugen Material aus der Verpackung entnehmen bzw. in die Verpackung einführten zu können. In einem Beispiel werden die Schritte b.i. bis b.iv. wiederholt, bis erkannt wird, dass die dem Material zugeordneten Punkten eine ausreichende sichtbare Fläche bilden.

Die beiden durch die Roboterarme geführten Klemmgreifer greifen - sofern möglich - abwechselnd einen Greifpunkt, manipulieren diesen und fixieren die Primärverpackung bis zur nach der nachfolgenden Manipulation durch den anderen Arm. Hierdurch kann ein zusammenfallen einer nicht fixierten Primärverpackung verhindert werden.

In einer Ausführungsform sind weitere Verfahrensschritte von der Position des in a.iv ermittelten höchsten Punktes der Primärverpackung abhängig.

In einer Ausführungsform werden in einer Alternativen zum Schritt a.v. die Verteilung des höchsten Punktes der Primärverpackung im Bezug zum Rand der Sekundärverpackung ermittelt. Aus der Verteilung, kann ermittelt werden, ob die Primärverpackung erst über die Sekundärverpackung zentriert, d. h. weitgehend entdreht, und hochgezogen werden muss, oder ob direkt mit dem Öffnen der Primärverpackung begonnen werden kann. Je weiter dieser höchste Punkt in der Mitte des Gebinde liegt, oder je weiter der höchste Punkt der Primärverpackung im Bezug zum Rand der Sekundärverpackung oberhalb einer vordefinierten Entfernungsgrenze zum Rand der Sekundärverpackung liegt, desto umfangreicher ist die Manipulation der Primärverpackung, um eine geöffnete Primärverpackung zu erlangen, d. h. desto größer der Bedarf an die Schritte c.i bis c.iii (Entdrehen und Hochziehen).

In einer Ausführungsform ist der Rand der Sekundärverpackung (der Trommelrand), mit minimaler Verdrehung der Primärpackung als ein Ziehziel definiert.

In einer Ausführungsform erfolgt in einem letzten Schritt das Stabilisieren der Primärverpackung in der zuvor erreichten Position durch eine externe Haltevorrichtung oder die Kante des Primärverpackung wird über den Rand der Sekundärverpackung nach unten gezogen.

In einer Ausführungsform sind diese sichtbare Fläche und /oder die Größe der nötigen Öffnung abhängig vom Werkzeug vordefiniert. In einem Beispiel kann der Nutzer über eine Nutzeroberfläche das gewünschte Werkzeug auswählen oder der dieses ist in einem Protokoll zur Entnahme oder Zufuhr von Material in die Primärverpackung durch den oder einen weiteren Roboter festgelegt.

Das Verfahren kann abgeschlossen werden, wenn aus der Sicht von oben das Material sichtbar ist und eine ausreichend große Öffnung aufweist, um mit Werkzeugen, wie z. B. Sauglanzen oder Beprobungswerkzeugen Material entnehmen zu können.

Typischerweise wird in weiteren Schritten das Material durch den Robotermodul oder durch einen anderen Robotermodul aus der Primärverpackung entnommen oder in die Primärverpackung eingeführt.

Abschließend kann die Primärverpackung durch das Robotermodul geschlossen werden. Z. B. kann das automatisierte Schließen der biegeschlaffe Primärverpackung in der formstabilen Sekundärverpackung durch den Roboter. dadurch erreicht werden, dass in einem ersten Subschritt die Primärverpackung gedreht wird, in einem zweiten Subschritt die Primärverpackung nach unten gedrückt wird, so dass die Primärverpackung geschlossen ist. In einem anderen Beispiel führt die Bewegung des Klemmgreifers zum Verdrehen der Primärverpackung und es können optional Schritte zum Verschluss der Primärverpackung mittels eines Binders oder einer Klammer durchgeführt werden.

In einer Ausführungsform umfasst das Drehen der primären Verpackung folgende Schritte: - Durchführung der Schritte a.i.bis a.iv. wie oben beschrieben.
a.v. Ermittelten des höchsten Punktes der Primärverpackung;
a.vi. Berechnung eines kollisionsfreien Annäherungspfad für einen der Klemmgreifer. Bevorzugt nähert sich der Klemmgreifer von oben. Für diese Berechnung wird die Definition geclusterter Bereiche aus a.iii verwendet.
a.vi. Annähern des Klemmreifers über den Annäherungspfad aus a.vi., greifen am in a.v. ermittelten höchsten Punkt der Primärverpackung und drehen, währenddessen die Verdrehung der Primärverpackung um die Längsachse mit Hilfe des KMS-Sensors gemessen wird, und das Handgelenk des Roboterarms in die Richtung der gemessenen Verdrehung gedreht wird, bis eine vordefinierte Obergrenze für die Spannung der Primärverpackung gemessen durch den KMS-Sensor erreicht wird oder bis erkannt wird, dass die dem Material zugeordneten Punkten eine Fläche mit einer ermittelten Größe Null oder nahe Null bilden.
a.vii. Loslassen der Primärverpackung durch Öffnen des Greifers.

In einer Ausführungsform umfasst das Verfahren nach dem Drehen Schritte zum Verschluss der Primärverpackung mittels eines Binders oder einer Klammer, bevor die Primärverpackung nach unten gedrückt wird.

In einer Ausführungsform wird in a.vi. gedreht und gleichzeitig nach unten gedrückt. Hiermit kann die Primärverpackung schneckenförmig in die Sekundärverpackung eingelegt werden.

In einer Ausführungsform ermöglicht das kraftgeregelte Robotermodul die Implementierung zahlreicher Sicherheitsfunktionen, welche die Verwendung des erfindungsgemäßen Systems ohne mechanische Schutzvorrichtungen ermöglicht. Beispielsweise stoppt der Manipulator seine Bewegung, wenn er eine Kraft größer als einen vordefinierten Wert ermittelt. Somit kann eine Gefährdung eines Nutzers oder Gegenstandes durch Kollision mit dem Robotermodul vermieden werden. Vorzugsweise umfasst das kraftgeregelte Robotermodul ebenfalls eine Geschwindigkeitsüberwachung, welche sicherstellt, dass der Roboterarm eine zulässige vordefinierte Maximalgeschwindigkeit nicht überschreitet.

Die erfindungsgemäße Lösung ist für das Manipulieren von Schüttgutmaterial, insbesondere Gefahrstoffe oder für das sterile Manipulieren des Materials insbesondere in der Pharma-Industrie vorteilhaft.

Einige Ausführungsformen des erfindungsgemäßen Verfahrens und der erfindungsgemäßen Vorrichtung werden nachfolgend anhand der beigefügten Zeichnungen näher beschrieben und erläutert. Variationen dieser Beispiele können für den Durchschnittsfachmann offensichtlich werden, solche Variationen gegebenenfalls anzuwenden, und die Erfinder beabsichtigen, dass die Erfindungen anders als hierin spezifisch beschrieben praktiziert werden. Dementsprechend umfasst diese Erfindung alle Modifikationen und Äquivalente des Gegenstands, die in den beigefügten Ansprüchen aufgeführt sind, soweit dies nach geltendem Recht zulässig ist. Darüber hinaus umfasst jede Kombination der oben beschriebenen Elemente in allen möglichen Variationen davon die Erfindung, sofern hierin nicht anders angegeben oder durch den Kontext eindeutig anders widersprochen.

Die Verwendung der Begriffe "ein" und "einen" und "der" und ähnlicher Verweise im Zusammenhang mit der Beschreibung der Erfindung (insbesondere im Zusammenhang mit den folgenden Ansprüchen) ist so auszulegen, dass sie sowohl den Singular als auch den Plural abdecken, sofern nicht anders angegeben hier angegeben oder durch den Kontext eindeutig widersprochen. Die Begriffe "umfassend", "einschließlich", "mit" und "enthaltend" sind als offene Begriffe zu verstehen (d. h. "einschließlich, aber nicht beschränkt auf"), sofern nicht anders angegeben.

### Zeichnungen:

- Fig 1: schematische Darstellungen der Vorrichtung zur Ausführung des Verfahrens gemäß einem bevorzugten Ausführungsbeispiel der Erfindung
- Fig 2: zeigt ein Flussdiagramm des erfindungsgemäßen Verfahrens mit den Schritten für das Öffnen der Primärverpackung mit dem Steuerungskriterium Untergrenze für die Größe der sichtbaren Fläche
- Fig 3: zeigt ein Flussdiagramm des erfindungsgemäßen Verfahrens mit den Schritten für das Öffnen der Primärverpackung mit dem Steuerungskriterium "Ist der Klemmgreifer direkt oberhalb des Randes der Sekundärverpackung?"
- Fig. 4: zeigt ein Bild der Vorrichtung indem die 3D-Punktewolke mit Hilfe eines Out-of-Core Algorithmus visualisiert wird und über die Primärverpackung angezeigt wird.
- Fig. 5: zeigt die 3D-Scanansicht der Vorrichtung.

Figur 1 zeigt exemplarisch eine schematische Darstellung des erfindungsgemäßen Systems und seiner Teilkomponenten von der Seite mit folgender Definition der Bezugszeichen:
1. Zweiarmigen Roboter
2. Klemmgreifer
3. Klemmgreifer
4. Kraft-Momenten-Sensor (KMS)
5. Primarverpackung
6. Sekundärverpackung
7. Stereo-Kamerasysteme
8. Aufnahme Sekundärverpackung (drehbar)
9. Beleuchtung
10. Greifpunkt des Klemmgreifers
   30 Der Sekundärverpackung zugeordnete Pixel
   21 Punktewolke der Primärverpackung
   22 Berechnete höchster Punkte der Primärverpackung

Zum Beispiel wurde im kraftgeregelte Robotermodul ein Leichtbauroboter LBR iiwa der Firma KUKAAG verwendet.

Zur Aufnahme einer 3D-Punktewolke des Aufnahmebereichs wurden mindestens zwei Stereokameras verwendet. Jeder Punkt der Wolke wird dabei zeitlich und räumlich (XYZ-Koordinaten) lokalisiert und kann in weiterer Folge auch georeferenziert werden.

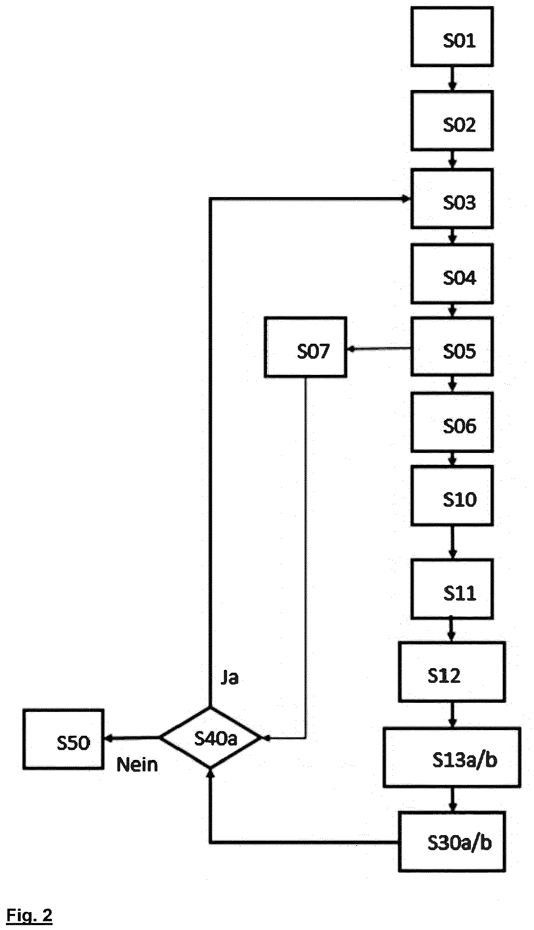

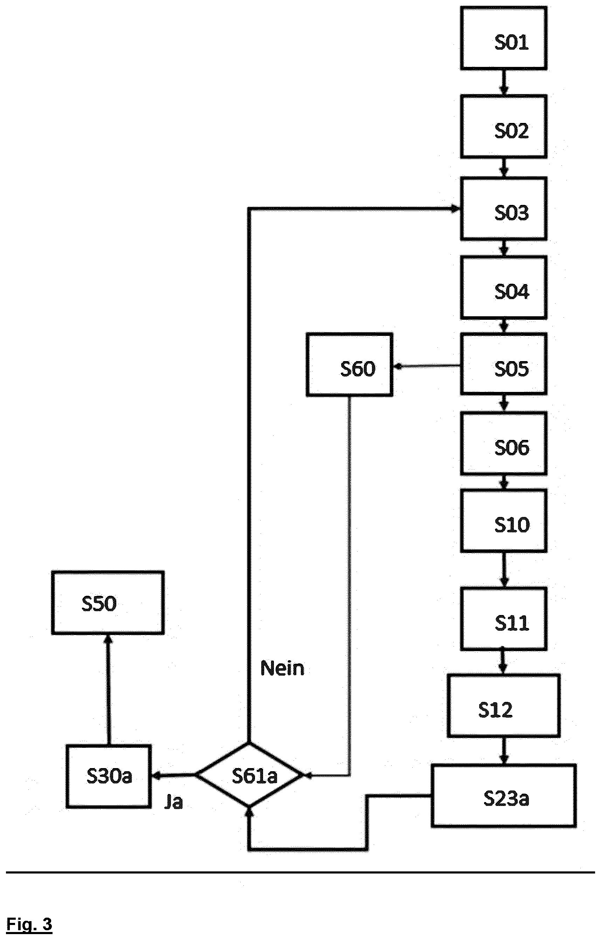

Figur 2 und 3 zeigen ein Flussdiagramm mit den Schritten der erfindungsgemäßen Verfahren.
Im Folgenden werden die Schritte der Verfahren unter Bezugnahme auf die Flussdiagramme erläutert.
S01 Positionieren der Gebinde im Aufnahmebereich sowie Festlegen der Steuerungskriterien, wie die Obergrenze für die Spannung der Primärverpackung und z B. der Untergrenze für die Größe der sichtbaren Fläche
   S02 Roboter in Initialposition
   S03 Aufnahme einer 3D-Punktewolke durch die mindestens zwei Stereokameras
S04 Entfernen von Rauschen und einer Reduktion der Punkteanzahl zur einfacheren Verarbeitung der Daten
   S05 Zuordnung von Punkten zu den bekannten Geometrien - Primärverpackung, Sekundarverpackung, Klemmgreifer und Roboter zur Oberflächenrekonstruktion mit Hilfe eines Programms zur Verarbeitung n-dimensionaler Punktwolken und dreidimensionaler Geometrie.
   S06 Selektion der Punkte der 3D-Punktewolke, die zur primären Verpackung zugeordnet sind
   S07 Selektion der Punkte der 3D-Punktewolke, die zum Material zugeordnet sind, Berechnung der sichtbaren Materialfläche,
S10 Ermittelten des höchsten Punktes der Primärverpackung mit Hilfe eines Algorithmus
   S11 Berechnen eines kollisionsfreien Annäherungspfads für den Klemmgreifer von der aktuellen Position zum höchsten Punkt der Primärverpackung mit Hilfe eines Algorithmus S12 Greifen mit einem Klemmgreifer am höchsten Punkt der Primärverpackung
   S13a - Primärverpackung öffnen durch Hochziehen mit dem Klemmgreifer der Primärverpackung unter kontinuierlichen Messungen der Verdrehung und der Spannung der Primärverpackung mit Hilfe des KMS-Sensors, und Drehung des Tool Center Point des Roboterarms entgegen der gemessenen Verdrehung bis der KMS-Sensor keine Verdrehung um die Längsachse mehr detektiert wird, und bis die Obergrenze für die Spannung der Primärverpackung gemessen durch den KMS-Sensor erreicht wird.
   S13b - Primärverpackung schließen durch Drehung des Tool Center Point des Roboterarms bis der KMS-Sensor eine Obergrenze für die Verdrehung um die Längsachse erreicht, und bis die Obergrenze für die Spannung der Primärverpackung gemessen durch den KMS-Sensor erreicht wird, und optional runterdrücken der der Primärverpackung bis eine Obergrenze für einen Widerstand durch den KMS-Sensor erreicht wird.
S23a - Primärverpackung öffnen durch Hochziehen mit dem Klemmgreifer der Primärverpackung unter kontinuierlichen Messungen der Verdrehung und der Spannung der Primärverpackung mit Hilfe des KMS-Sensors, und Drehung des Tool Center Point des Roboterarms entgegen der gemessenen Verdrehung eine vordefinierte Obergrenze für die Spannung der Primärverpackung gemessen durch den KMS-Sensor erreicht wird
S30a/b Loslassen der Primärverpackung durch Öffnen des Klemmgreifers
S40a Die sichtbare Fläche ≤ Untergrenze der sichtbaren Fläche aus S01
   Wiederholung von S02 bis S30a mit dem anderen Arm bis die sichtbare Fläche ≤ Untergrenze der sichtbaren Fläche aus S01 verneint wird.
S50 Stabilisieren der Primärverpackung in der offenen Position
S60 Definition des Randes der Sekundärverpackung
   S61a - Ist der Klemmgreifer oder der höchste Punkt der Primärverpackung direkt oberhalb des Randes der Sekundärverpackung oder liegt der Klemmgreifer oder der höchste Punkt der Primärverpackung einer Entfernung größer oder gleich einer vordefinierten Entfernungsgrenze zum Rand der Sekundärverpackung?

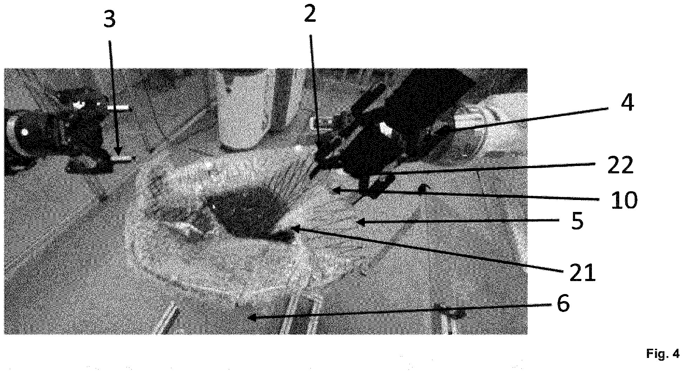

Figur 4 zeigt ein Bild der Vorrichtung indem zur Veranschaulichung die 3D-Punktewolke über die Primärverpackung angezeigt wird. Der Greifpunkt (10) des Klemmgreifers (3) nähert sich einem der berechneten höchsten Punkte der Primärverpackung (22).

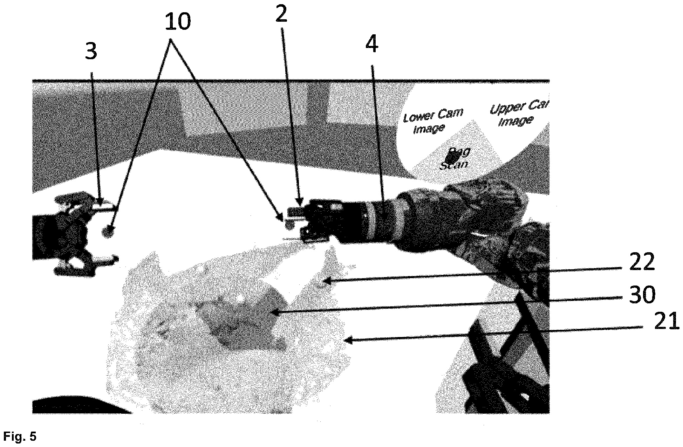

Figur 5 zeigt eine 3D-Scanansicht der Vorrichtung insbesondere die der Sekundärverpackung zugeordnete Pixel (30), die Punktewolke der Primärverpackung (21) und die berechneten höchsten Punkte der Primärverpackung (22). Der Klemmgreifer (3) nähert sich einem der höchsten Punkte von oben an.

## Patentansprüche

1. System zum automatisierten Manipulieren einer Primärverpackungen in einer Sekundärverpackung, zusammen Gebinde genannt, mit folgenden Systemkomponenten:
a. Ein Robotermodul umfassend einen Roboter mit mindestens einen Roboterarmen, mit jeweils einem Klemmgreifer an einem Tool Center Point montiert und, wobei jeder Tool Center Point ein Kraft-Momenten-Sensor umfasst, der mindestens Messungen zur Kraft-und-Momentrichtung oder Freiheitsgrade bereitstellen kann;
b. Ein Bildaufnahmemodul zur Bildaufnahme mindestens des oberen Segments der Primärverpackung umfassend mindestens zwei Stereokameras zu 3D-Bildaufnahme, wobei mindestens eine der Stereokameras seitlich zu einer Linie zwischen dem Gebinde und dem Roboter platziert ist;
c. Ein oder mehrere Prozessoren zur Steuerung der Systemmodule konfiguriert für die Durchführung folgender Schritte:
- Steuerung der Bildaufnahme durch das Bildaufnahmemodul;
- Empfang mindestens eines Bildes aus dem Bildaufnahmemodul;
- Bildbearbeitung und Bereitstellen einer 3-dimensionale-Punktwolke aus den empfangenen Bildern;
- Oberflächenrekonstruktion der Primärverpackung und der Sekundärverpackung aus der 3-dimensionalen-Punktwolke;
- Berechnen eines höchsten Punktes der Primärverpackung aus der 3D-Punktwolke als Greifposition für einen der Klemmgreifer sowie Berechnen eines Bewegungsablaufs des Roboterarms zu der Greifposition;
- Weitergeben des berechneten Bewegungsablaufs an das Robotermodul;
- Empfang der Messungen aus den Kraft-Momenten-Sensoren und Detektion einer Verdrehrichtung und /oder Spannung der Primärverpackung aufgrund eines auftretenden Drehmomentes;
d. Schnittstellen zwischen das Robotermodul und den Prozessoren und zwischen das Bildaufnahmemodul und den Prozessoren.

2. System nach Anspruch 1, wobei die zweite Kamera das Gebinde von oben aufnehmen kann.

3. System nach Anspruch 1, wobei der Roboter fixiert ist

4. System nach einem der Ansprüche 1 bis 3, umfassend ein Modul zur Platzierung der Gebinde in Reichweite der Roboterarme und im Aufnahmebereich der Stereokameras, wobei das Gebinde im Modul zur Platzierung der Gebinde drehbar gelagert ist.

5. System nach einem der Ansprüche 1 bis 4, wobei die Kraft-Momenten-Sensoren, ausgewählt sind, um die Verdrehrichtung und Spannung der Primärverpackung aufgrund des auftretenden Drehmomentes permanent in 6 Dimensionen, 3 translatorische und 3 rotatorische Dimensionen, detektieren zu können.

6. Verfahren zum automatisierten Manipulieren einer biegeschlaffe Primärverpackung in einer formstabilen Sekundärverpackung, zusammen Gebinde genannt, durch einen computer-gesteuerten Roboter mit mindestens einen Arm mit jeweils einem an einem Tool Center Point fixierten Klemmgreifer überwacht mit einem Kraft-Momenten-Sensor, mit folgenden Schritten
A) Bereitstellung einer 3-dimensionale Punktewolke mindestens des oberen Segments der Primärverpackung;
B) Ermitteln eines höchsten Punktes der Primärverpackung aus der 3-dimensionalen -Punktewolke, als Greifpunkt für einen der Klemmgreifer mit Hilfe eines Computerprogramms;
C) Berechnung eines kollisionsfreien Annäherungspfads zu dem berechneten Greifpunkt und sonstige Bewegung für den Klemmgreifer mit Hilfe des Computerprogramms und Übermittlung des Annäherungspfads an den Roboter; und
D) Bewegung des Klemmgreifers nach dem berechneten Bewegungsablauf zu dem Greifpunkt, Greifen der Primärverpackung am Greifpunkt, und
- entweder die Primärverpackung in einer Bewegung oder eine Drehbewegung unter Berücksichtigung von Informationen aus dem Kraft-Momentan-Sensor am Tool Center Point des bewegten Klemmgreifers entdrehen nach oben hoch ziehen, bis eine vordefinierte Obergrenze für die Spannung der Primärverpackung gemessen durch den KMS-Sensor erreicht wird und/oder vordefinierten Kriterien für das Öffnen der Primärverpackung erreicht werden, alternativ
- die Primärverpackung verdrehen und optional nach unten drücken, bis eine vordefinierte Obergrenze für die Spannung der Primärverpackung gemessen durch den KMS-Sensor erreicht wird und / oder vordefinierten Kriterien für das Schließen der Primärverpackung erreicht werden;
E) Loslassen der Primärverpackung und optional Zurückfahren des Klemmgreifers zu einer Startposition;
- Wiederholung der Schritte A) bis E), bis die vordefinierten Kriterien für das Öffnen der Primärverpackung erreicht werden oder die vordefinierten Kriterien für das Schließen der Primärverpackung wie erforderlich erreicht sind.

7. Verfahren nach Anspruch 6, wobei die 3-dimensionalen Punktewolke aus Bildaufnahme mindestens des oberen Segments der Primärverpackung durch zwei Stereokameras und Verarbeitung dieser Bildaufnahme gewonnen wird.

8. Verfahren nach Anspruch 6, wobei Punkte der 3-dimensionalen Punktewolke der Primärverpackung und der Sekundärverpackung, und optional dem Klemmgreifer zugeordnet werden.

9. Verfahren nach Anspruch 8, wobei in einer Ausführung des Schritts D) aus den Punkte der 3-dimensionalen Punktewolke, die zu der Sekundärverpackung zugeordnet sind, einen Rand der Sekundärverpackung definiert wird und die Primärverpackung hochgezogen und entdreht ist, wenn der höchste Punkt der Primärverpackung mit einer Entfernung größer oder gleich einer vordefinierten Entfernungsgrenze zum Rands der Sekundärverpackung liegt.

10. Verfahren nach Anspruch 6, wobei in einer Ausführung des Schritts D) Punkte der 3-dimensionalen Punktewolke einer sichtbaren Fläche eines Materials in der Primärverpackung zugeordnet werden, die Position und Größe der sichtbaren Materialfläche ermittelt werden, und die Primärverpackung hochgezogen und entdreht ist, wenn die Größe der sichtbaren Materialfläche ausreichend ist, um mit Hilfe eines vordefinierten Werkzeugs Material aus der Primärverpackung zu entnehmen bzw. in die Primärverpackung einzuführen.

11. Verfahren nach einem der oberen Ansprüche 6 bis 10, wobei in einer Ausführung des Schritts D) die Primärverpackung hochgezogen und entdreht wird, mit folgenden Sub schritten:
- Mit dem Klemmgreifer, Greifen von oben am ermittelten höchsten Punkt der Primärverpackung und hochziehen bis eine vordefinierte Obergrenze für die Spannung der Primärverpackung gemessen durch den Kraft-Momenten-Sensoren erreicht wird, währenddessen die Verdrehung der Primärverpackung mit Hilfe der Kraft-Momenten-Sensoren gemessen wird, und das Tool Center Point entgegen der gemessenen Verdrehung gedreht wird, bis der die Kraft-Momenten-Sensoren keine Verdrehung um die Längsachse mehr detektieren.
